# EUROPÄISCHE PATENTSCHRIFT

(11) **EP 1 750 121 B1**
(45) Veröffentlichungstag und Bekanntmachung des Hinweises auf die Patenterteilung: **10.12.2008**
(21) Anmeldenummer: 06013566.2
(22) Anmeldetag: 30.06.2006
(51) Int. Cl.: G01N 27/38

(54) **Sondeneinrichtung zur Messung von Prozessgrössen, insbesondere physikalisch-chemischer Messgrössen, in Fluiden**
Probe arrangement for the measurement of process variables, in particular physical-chemical quantities, in fluids
Dispositif comprenant une sonde pour la mesure des variables, en particulier des grandeurs de mesure physico-chemiques, des fluides

(30) Priorität: 02.08.2005 DE 102005036865
(43) Veröffentlichungstag der Anmeldung: 07.02.2007
(73) Patentinhaber: Knick Elektronische Messgeräte GmbH & Co. KG, 14163 Berlin (DE)
(72) Erfinder: Schiffer, Jens, 14480 Potsdam (DE)
(74) Vertreter: Hübner, Gerd

(56) Entgegenhaltungen:
- EP-A- 0 590 290
- EP-A2- 0 391 838
- EP-A2- 1 136 818
- DE-A1- 19 721 965
- DE-A1- 19 723 681
- DE-U1- 29 720 248

## Beschreibung

Die Erfindung betrifft eine Sondeneinrichtung zur Messung von Prozessgrößen und insbesondere von physikalisch-chemischen Messgrößen in Fluiden mit den im Oberbegriff des Patentanspruches 1 angegebenen Merkmalen.

Derartige Sondeneinrichtungen sind beispielsweise aus der DE 197 23 681 A1 bzw. EP 0 391 838 B1 bekannt. Der nächstkommende Stand der Technik ist durch die EP 1 136 818 A2 repräsentiert. Die dort gezeigte Sondeneinrichtung weist einen an den Prozessbehälter anschließbaren Sondenkörper, eine in einem Führungskanal des Sondenkörpers axial zwischen einer eingeschobenen Kalibrierstellung und einer ausgeschobenen Messstellung verschiebbare Sondenhalterung, die an ihrem in das Prozessfluid eintauchbaren Frontende einen Schutzzylinder aufweist, einen in der Sondenhalterung gehaltenen Messsensor, dessen Messspitze innerhalb eines mit Abstand vor dem Frontende zur Bildung von Spülöffnungen durchbrochenen Bereiches des Schutzzylinders angeordnet ist, eine zwischen Sondenhalterung und Führungskanal gebildete Kalibrierkammer, mindestens je eine in die Kalibrierkammer mündende Zufluss- und Abflussöffnung für Kalibrier- und Spülflüssigkeit, sowie die Kalibrierkammer beiderseits der Zufluss- und Abflussöffnung begrenzende, im Sondenkörper angeordnete Dichtungselemente zwischen Sondenhalterung und Führungskanal auf.

Bei den eingangs erwähnten Messungen von insbesondere physikalisch-chemischen Messgrößen handelt es sich beispielsweise um pH-, Redox-, Leitfähigkeit- oder Sauerstoffgehaltsmessungen in einem Medium. Zum Hintergrund der Erfindung ist dabei beispielsweise im Hinblick auf pH-Messungen auszuführen, dass die hierzu üblicher Weise verwendeten Glaselektroden in gewissen Zeitabständen ohne Unterbrechung des überwachten Prozesses durch die Zuführung von Spülmedien gereinigt oder durch Zuführung von Pufferlösungen kalibriert werden müssen. Dazu muss die Glaselektrode aus dem zu messenden Medium etwa bei einem in der chemischen Industrie überwachten Prozess in eine von diesem Prozess abgeschlossene Kammer - der erwähnten Kalibrierkammer - innerhalb der Sondeneinrichtung gebracht werden. Diese Kammer ist mit entsprechenden Zu- und Abflussleitungen zu verbinden, um die für die Reinigung, Spülung und Kalibrierung notwendigen Medien zuführen zu können. Dabei muss eine Abdichtung der Kalibrierkammer gewährleistet sein, um eine Verunreinigung oder anderweitige Beeinflussung der zu messenden Flüssigkeit zu vermeiden oder auf einem akzeptablen Niveau zu halten. Ferner besteht die Notwendigkeit, die Messspitze des Sensors bei einer Kalibrierung möglichst vollständig und gründlich zu spülen und gleichmäßig mit Kalibrierlösung zu umströmen. In diesem Zusammenhang zeigen die Sondeneinrichtungen gemäß der eingangs genannten DE 197 23 681 A1 und EP 0 391 838 B1 Schwächen, da Zufluss- und Abflussöffnung radial von gegenüberliegenden Seiten auf gleicher Höhe in die Kalibrierkammer münden. Vor den Mündungsöffnungen kommt der durchbrochene Bereich des Sondenhalterungs-Schutzzylinders zu liegen, wo fensterartige Spülöffnungen durch axialparallele Stege gebildet werden. Letztere stehen im Strömungsfeld der Spül- und Kalibrierlösungen, wodurch in Strömungsrichtung hinter diesen Stegen Abschattungen und Verwirbelungen gebildet werden und die Reinigungswirkung der Spüllösung und gleichmäßige Beaufschlagung der Messspitze mit einer Kalibrierlösung unter Umständen nicht gewährleistet sind. Dieser Nachteil trifft auch auf die Sondeneinrichtung gemäß EP 1 136 818 A2. Zu, obwohl dort ein axialer Versatz zwischen den in die Kalibrierkammer mündenden zu- und Abflussöffnungen für Spül- und Kalibrierflüssigkeiten vorhanden ist.

Ein weiterer Nachteil der vorbekannten Sondeneinrichtungen besteht ferner in dem relativ langen Kopfabschnitt des am fluidseitigen Ende der Sondenhalterung gelegenen Schutzzylinders, der beispielsweise bei der Sonde gemäß EP 0 391 838 B1 mindestens die Länge der Kalibrierkammer zwischen den beiden sie begrenzenden Dichtungsringen beträgt. Damit ist gewährleistet, dass durch diesen zylindrischen Kopf während des Überfahrens des durchbrochenen Bereiches über das die Kalibrierkammer fluidseitig begrenzende Dichtungselement mit einem weiteren, am fluidseitigen Ende des Sondenkörpers angeordneten Dichtungsring eine Abdichtung erfolgt. Diese große Axiallänge des Kopfes des Sondenhalterungs-Schutzzylinders bedingt, dass für eine bestimmte Eintauchtiefe der Messspitze ein Hub an der Sondenhalterung erzeugt werden muss, der um die Axiallänge des Sondenhalterungs-Kopfes vergrößert ist.

Bei der Sondeneinrichtung gemäß DE 197 23 681 A1 sind zusätzliche Dichtungsringe an diesem ebenfalls vergleichsweise lang ausgeführten Sondenhalterungs-Kopf vorgesehen. Diese stehen in der Messstellung der Sondeneinrichtung direkt und unmittelbar im Strom des Prozessfluids, sodass ein schneller Verschleiß, insbesondere bei aggressiven Medien, zu befürchten steht.

Bei der Sondeneinrichtung gemäß EP 1 136 818 A2 ist die Kalibrierkammer bei eingefahrener Sondenhalterung und Messsensor kopfseitig abgedichtet. Beim Ausfahren der Sondenhalterung und insbesondere beim Überfahren der Spülöffnungen über diese Dichtung wird die Kalibrierkammer und deren Zu- und Abflussöffnung für Prozessfluid offen, was bei beiden Öffnungen eine gesonderte Absperrung für diesen Zustand notwendig macht.

Der Erfindung liegt nun die Aufgabe zugrunde, eine Sondeneinrichtung so zu verbessern, dass für die Abflussöffnung der Kalibrierkammer keine gesonderte Absperrung notwendig ist.

Diese Aufgabe wird durch die im Kennzeichnungsteil des Anspruches 1 angegebenen Merkmale gelöst, wonach benachbart zur Abflussöffnung zwischen dieser und der Zuflussöffnung ein Zwischen-Dichtelement vorgesehen ist. Dieses Zwischen-Dichtelement dichtet die Kalibrierkammer zur Abflussöffnung hin während des Aus- und Einfahrens der Sondenhalterung mit ihrem Messsensor ab, sodass das erwähnte Verschlusselement für die Abflussöffnung schlicht entfallen kann.

Vorteilhafterweise weist das Zwischen-Dichtelement zu dem die Kalibrierkammer rückwärtig, also vom Prozessfluid weg begrenzenden Dichtungselement einen derartigen Axialabstand auf, dass beim Ein- und Ausfahren der Sondenhalterung mit ihrem Messsensor in einer Zwischenstellung eine direkte Fluidverbindung zwischen dem Prozessfluid und der Durchflussöffnung besteht. Damit besteht die Möglichkeit, in diesem "halboffenen" Zwischenzustand Spülflüssigkeit über eine Zuflussöffnung einzuspritzen, wodurch eine Beaufschlagung der Kalibrierkammer mit oftmals Fasern oder Partikel beinhaltendem Prozessfluid vermieden werden kann. Damit wird das prozessseitige Dichtungselement geschont.

Das erfindungsgemäße Anordnungsprinzip der beiden die Kalibrierkammer begrenzenden Dichtungselemente mit dem Zwischen-Dichtungselement bedingt vorteilhafter Weise ferner, dass der vor den Spülöffnungen gelegene Kopf des Schutzzylinders der Sondenhalterung eine geringe Axiallänge aufweisen kann, die nur geringfügig größer als der Axialabstand des Zwischen-Dichtelementes zu dem die Kalibrierkammer rückwärtig begrenzenden Dichtelement zu sein braucht. Dies verkürzt die Baulänge der Sondenhalterung, wodurch bei einem vorgegebenen Hub der Sondenhalterung eine höhere Eintauchtiefe der Messelektrode erreicht werden kann.

In den weiteren Unteransprüchen sind vorteilhafte Ausgestaltungen der Zufluss- und Abflussöffnungen angegeben, die das erfindungsgemäße Dichtungsprinzip wirkungsvoll unterstützen. So werden die Strömungseigenschaften durch die Kalibrierkammer noch dadurch verbessert, dass die Zufluss- und Abflussöffnungen über peripher umlaufende Ringkanäle in der Kalibrierkammer ausmünden. Damit werden Spül- und Kalibrierlösungen an jeder Umfangsposition gleichmäßig in die Kalibrierkammer eingebracht und strömen dann axial unmittelbar und ungestört an der Messspitze entlang zur Abflussöffnung.

Weitere bevorzugte Ausführungsforrnen der Sondeneinrichtung sind den Unteransprüchen entnehmbar, deren Merkmale, Einzelheiten und Vorteile in der nachfolgenden Beschreibung eines Ausführungsbeispiels der Erfindung anhand der beigefügten Zeichnungen deutlich werden. Es zeigen:

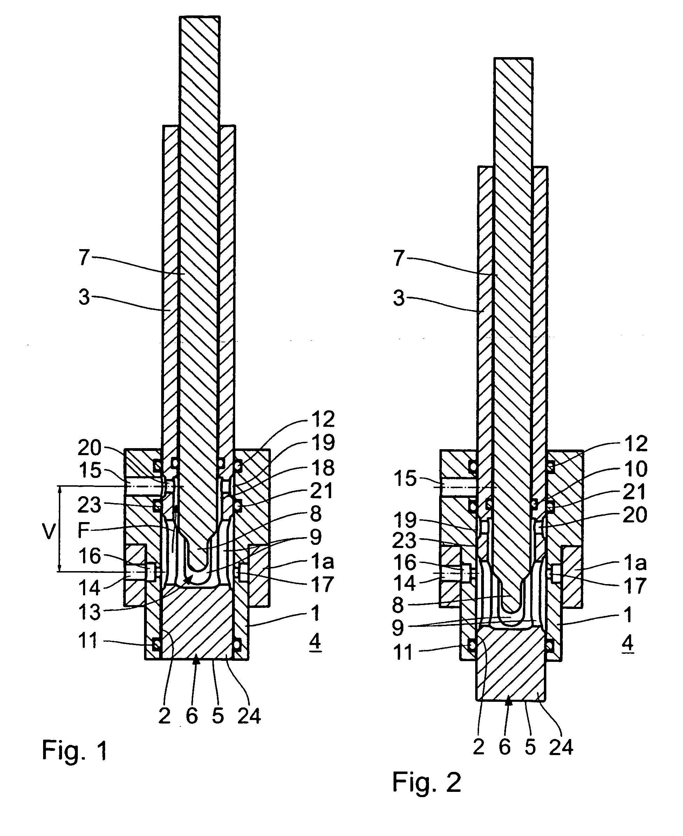

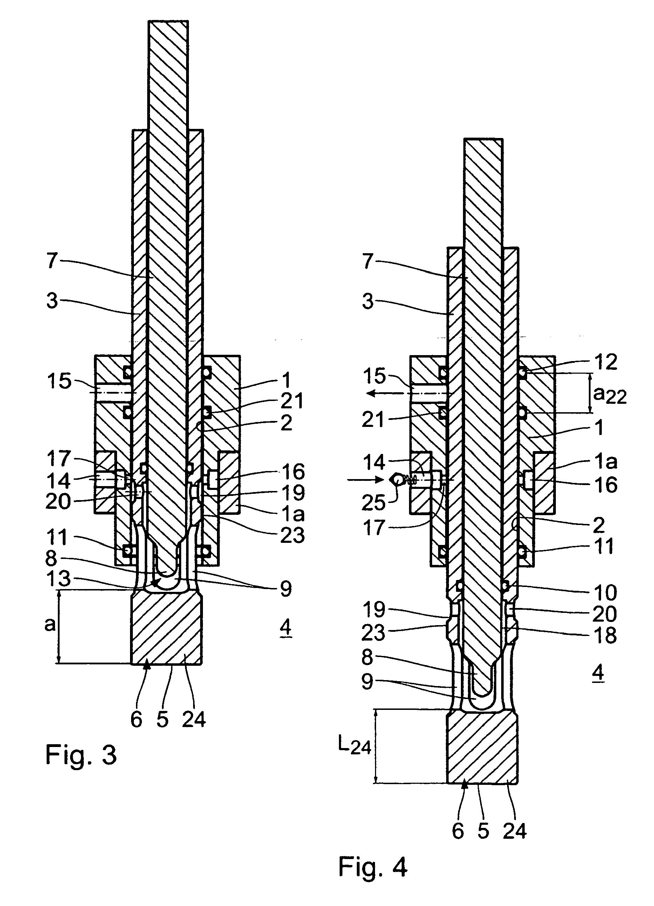

- Fig. 1 bis 4: Axialschnitte der Sondeneinrichtung in verschiedenen aufeinanderfolgenden Funktionsstellungen zwischen Kalibrierstellung (Fig. 1) und Messstellung (Fig. 4).

Wie aus den Zeichnungen hervorgeht, weist die Sondeneinrichtung einen nur rudimentär dargestellten Sondenkörper 1 auf, der über einen nicht dargestellten Adapter - beispielsweise einen Milchrohr-Adapter - an einen Prozessbehälter oder eine -leitung anschließbar ist. Der Sondenkörper 1 weist einen zylindrischen Führungskanal 2 auf, in dem eine mit einem entsprechenden Außendurchmesser versehene, rohrartige Sondenhalterung 3 axial verschiebbar ist. Diese bildet an ihrem in das Prozessfluid 4 eintauchbaren Frontende 5 einen Schutzzylinder 6 für eine Messelektrode 7, die in der Sondenhalterung 3 gehalten ist. Die Messspitze 8 der Messelektrode 7 ist dabei innerhalb eines mit Abstand a (Fig. 3) vor dem Frontende 5 durchbrochenen Bereiches des Schutzzylinders 6 vor den damit gebildeten Spülöffnungen 9 angeordnet. Über diese Spülöffnungen 9 wird die Messspitze 8 der Messelektrode 7 mit der jeweils anfallenden Flüssigkeit beaufschlagt, also während der eigentlichen Messung mit dem Prozessfluid und während der Kalibrierung mit den notwendigen Spül- und Kalibrierlösungen. Der Ringspalt zwischen Messelektrode 7 und Sondenhalterung 3 ist dabei durch einen hinter der Messspitze 8 gelegenen O-Ring 10 abgedichtet.

Im Sondenkörper 1 ist zwischen einem prozessseitigen Dichtring 11 und einem rückwärtigen, inneren Dichtring 12 eine Kalibrierkammer 13 angelegt, die zwischen Sondenhalterung 3 und Führungskanal 2 ausgebildet ist. In diese Kalibrierkammer 13 mündet in einer prozessseitigen Axialposition in radialer Richtung eine Zuflussöffnung 14. Mit größerem Abstand zum Prozessfluid 4 und damit einem Versatz V (Fig. 1) geht wiederum radial eine Abflussöffnung 15 von der Kalibrierkammer 13 ab.

Die Mündung der Zuflussöffnung 14 ist als nach außen durch einen Abdeckring 1a geschlossener Ringkanal 16 im Sondenkörper 1 ausgebildet, von dem aus über peripher verteilte Einströmöffnungen 17 eine Spül- oder Kalibrierflüssigkeit in peripher gleichmäßiger Verteilung in die Kalibrierkammer 13 eintreten kann. Von dort wird die Flüssigkeit dann im Wesentlichen mit einer axialen Durchströmungsrichtung F zu der Abflussöffnung 15 geleitet. Der Strömungsweg führt dabei über einen zwischen Sondenhalterung 3 und Messelektrode 7 frei bleibenden Ringspalt 18 nach dem Bereich der Spülöffnungen 9 zu über den Umfang verteilten Ausströmöffnungen 20 in einen ebenfalls in der Sondenhalterung 3 angelegten Ringkanal 19, von dem aus die Flüssigkeit in die Abflussöffnung 15 treten kann. Zwischen den Spülöffnungen 9 einerseits und der Abflussöffnung 15 mit dem Ringkanal 19 andererseits ist die Ringfuge zwischen Sondenhalterung 3 und Führungskanal 2 durch einen Zwischen-Dichtring 21 abgedichtet, sodass eine gleichmäßige axiale Strömung um die Messelektrode 7 und deren Spitze 8 herum gewährleistet ist. Dieser Zwischen-Dichtring 21 kooperiert dabei mit der zwischen den Spülöffnungen 9 und dem Ringkanal 19 in der Sondenhalterung 3 angelegten Dichtschulter 23.

In der in Fig. 1 gezeigten Kalibrierstellung der Sondenhalterung 3 ist diese komplett in den Sondenkörper 1 zurückgefahren. Die Kalibrierkammer 13 steht mit der Zufluss- 14 und Abflussöffnung 15 in Verbindung, sodass nacheinander Spül-, Kalibrier- und wiederum Spüllösungen über die Zuflussöffnung 14 durch die Kalibrierkammer 13 in axialer Durchströmungsrichtung F wie erörtert zur Abflussöffnung 15 geleitet werden können.

Zur Überführung der Messelektrode 7 in ihre Messstellung wird die Sondenhalterung 3 in Richtung Prozessfluid 4 verschoben, wobei - wie in Fig. 2 gezeigt ist - der zwischen Frontende 5 und Spülöffnungen 9 gebildete Kopf 24 des Schutzzylinders 6 in seiner Axiallänge L₂₄ so bemessen ist, dass er mit dem prozessseitigen Dichtring 11 noch abdichtet, während der Ringkanal 19 den Zwischen-Dichtring 21 überfährt. Danach ist die Fuge zwischen Sondenhalterung 3 und Abflussöffnung 15 über den Zwischen-Dichtring 21 abgedichtet, wie dies in Fig. 2 gezeigt ist. Die axiale Länge L₂₄ des Kopfes 24 des Schutzzylinders 6 ist also nur geringfügig größer als der Axialabstand a₂₂ zwischen dem rückseitigen Dichtring 12 und dem Zwischen-Dichtring 21, was jedoch deutlich geringer als die entsprechenden Axiallängen bei Sondeneinrichtungen nach dem eingangs genannten Stand der Technik ist. Damit lässt sich bei einem vorgegebenen Hub der Sondenhalterung 3 eine höhere Eintauchtiefe der Messelektrode 7 erreichen.

Beim weiteren Ausfahren der Sondenhalterung 3 aus dem Sondenkörper 1 gelangt die Sondenhalterung 3 mit ihrem offenen Bereich der Spülöffnungen 9 in den Bereich des prozessseitigen Dichtringes 11, wodurch hier keine Dichtfunktion mehr stattfindet. Es kann hier zwar Prozessflüssigkeit durch den Ringspalt 18 und den Ringkanal 19 in Richtung zum Ringkanal 16 der Zuflussöffnung 14 gelangen. Da letztere jedoch durch ein Rückschlagventil 25 (nur in Fig. 4 dargestellt) verschlossen ist, gelangt Prozessfluid 4 nicht weiter als bis dorthin. Zur Unterbindung dieses Effektes kann allerdings in dem undichten Zustand gemäß Fig. 3 eine den Prozess nicht beeinflussende Spülflüssigkeit über die Zuflussöffnung 14 eingespritzt werden, wodurch ein Eindringen von Prozessfluid 4, das oftmals Fasern oder Partikel beinhaltet, in den Führungskanal 2 vermieden wird. Damit wird die prozessseitige Dichtung 11 geschont, was insbesondere beim Einfahren der Sondenhalterung 3 in den Sondenkörper 1 von Vorteil ist.

In Fig. 4 schließlich ist die Sondenhalterung 3 in ihrer komplett ausgefahrenen Messstellung gezeigt, in der die Fuge zwischen Sondenhalterung 3 und Führungskanal 2 des Sondenkörpers 1 komplett durch den prozessseitigen Dichtring 11 abgedichtet ist.

## Patentansprüche

1. Sondeneinrichtung zur Messung von Prozessgrößen, insbesondere physikalisch-chemischer Messgrößen, in Fluiden umfassend
- einen an den Prozessbehälter anschließbaren Sondenkörper (1),
- eine in einem Führungskanal (2) des Sondenkörpers (1) axial zwischen einer eingeschobenen Kalibrierstellung und einer ausgeschobenen Messstellung verschiebbare Sondenhalterung (3), die an ihrem in das Prozessfluid (4) eintauchbaren Frontende (5) einen Schutzzylinder (6) aufweist,
- einen in der Sondenhalterung (3) gehaltenen Messsensor (7), dessen Messspitze (8) innerhalb eines mit Abstand (a) vor dem Frontende (5) zur Bildung von Spülöffnungen (9) durchbrochenen Bereiches des Schutzzylinders (6) angeordnet ist,
- eine zwischen Sondenhalterung (3) und Führungskanal (2) gebildete Kalibrierkammer (13),
- mindestens je eine in die Kalibrierkammer (13) mündende Zufluss-und Abflussöffnung (14, 15) für Kalibrier- und Spülflüssigkeit, die mit einem axialen Versatz (V) zueinander derart angeordnet sind, dass die die Kalibrierkammer (13) durchströmenden Flüssigkeiten eine im Wesentlichen axiale, vom Prozessfluid (4) weg gerichtete Durchströmungsrichtung (F) aufweisen, sowie
- die Kalibrierkammer (13) beiderseits der Zufluss- und Abflussöffnung (14, 15) begrenzende, im Sondenkörper (1) angeordnete Dichtungselemente (11, 12) zwischen Sondenhalterung (3) und Führungskanal (2),
**dadurch gekennzeichnet, dass** benachbart zur Abflussöffnung (15) zwischen dieser und der Zuflussöffnung (14) ein Zwischen-Dichtelement (21) zur Abdichtung der Kalibrierkammer (13) zur Abflussöffnung (15) hin während des Aus- und Einfahrens der Sondenhalterung (3) mit dem Messsensor (7) angeordnet ist.

2. Sondeneinrichtung nach Anspruch 1, **dadurch gekennzeichnet, dass** das Zwischen-Dichtelement (21) zu dem die Kalibrierkammer (13) rückwärtig vom Prozessfluid (4) weg begrenzenden Dichtungselement (12) einen derartigen Axialabstand (a₂₂) aufweist, dass beim Ein- und Ausfahren der Sondenhalterung (3) mit dem Messsensor (7) in einer Zwischenstellung eine direkte Fluidverbindung zwischen dem Prozessfluid (4) und der Zuflussöffnung (14) besteht.

3. Sondeneinrichtung nach Anspruch 2, **dadurch gekennzeichnet, dass** der vor den Spülöffnungen (9) gelegene Kopf (24) des Schutzzylinders (6) eine Axiallänge (L₂₄) aufweist, die geringfügig größer ist als der Axialabstand (a₂₂) des Zwischen-Dichtelementes (21) zu dem die Kalibrierkammer (13) rückwärtig begrenzenden Dichtelement (12).

4. Sondeneinrichtung nach einem der vorgenannten Ansprüche, **dadurch gekennzeichnet, dass** die Kalibrierkammer (13) peripher umlaufende Ringkanäle (16, 19) als Mündungen der Zufluss- und Abflussöffnung (14, 15) aufweist.

5. Sondeneinrichtung nach Anspruch 4, **dadurch gekennzeichnet, dass** der der Abflussöffnung (15) zugeordnete Ringkanal (19) in der Sondenhalterung (3) angelegt ist.

6. Sondeneinrichtung nach Anspruch 4 oder 5, **dadurch gekennzeichnet, dass** im Anschluss an die Spülöffnungen (9) zwischen Sondenhalterung (3) und Messsensor (7) ein axialer Ringspalt (18) zur Flüssigkeitsableitung zum Ringkanal (19) der Abflussöffnung (15) hin vorgesehen ist.

7. Sondeneinrichtung nach Anspruch 4 und 6, **dadurch gekennzeichnet, dass** zwischen den Spülöffnungen (9) und dem Ringkanal (19) in der Sondenhalterung (3) eine in der Kalibrierstellung mit dem Zwischen-Dichtelement (21) kooperierende Dichtschulter (23) angelegt ist.

8. Sondeneinrichtung nach einem der vorgenannten Ansprüche, **dadurch gekennzeichnet, dass** die Zuflussöffnung (14) durch ein Rückschlagventil (25) gegen eindringendes Prozessfluid (4) verschließbar ist.

## Claims

1. Probe arrangement for the measurement of process variables, in particular physical-chemical quantities, in fluids, the probe arrangement comprising
- a probe body (1) which is connectable to the process container;
- a probe holder (3) which is axially displaceable in a guide channel (2) of the probe body (1) between a retracted calibration position and an extended measuring position, and which is provided with a protective cylinder (6) on its front end (5) which is immersible into the process fluid (4);
- a measuring sensor (7) which is held in the probe holder (3) and whose measuring tip (8) is arranged in a region of the protective cylinder (6) which is broken through at a distance (a) from the front end (5) for forming flushing openings (9);
- a calibration chamber (13) formed between probe holder (3) and guide channel (2);
- at least in each case one inflow and outflow opening (14, 15) for calibration and flushing liquid, which inflow and outflow openings (14, 15) project into the calibration chamber (13) and are arranged at an axial offset (V) relative to each other in such a way that the liquids flowing through the calibration chamber (13) have a substantially axial flow direction (F) leading away from the process fluid (4); and
- sealing elements (11, 12) which are arranged in the probe body (1) between probe holder (3) and guide channel (2) and delimit the calibration chamber (13) on both sides of the inflow and outflow openings (14, 15),
**characterised in that** adjacent to the outflow opening (15), an intermediate sealing element (21) is arranged between the outflow opening (15) and the inflow opening (14) for sealing the calibration chamber (13) towards the outflow opening (15) during extension and retraction of the probe holder (3) with the measuring sensor (7).

2. Probe arrangement according to claim 1, **characterised in that** the intermediate sealing element (21) has such an axial distance (a₂₂) from the sealing element (12) which delimits the calibration chamber (13) rearwardly on the far side of the process fluid so that when retracting and extending the probe holder (3) with the measuring sensor (7), there is a direct fluid connection between the process fluid (4) and the inflow opening (14) in an intermediate position.

3. Probe arrangement according to claim 2, **characterised in that** the head (24) of the protective cylinder (6) disposed in front of the flushing openings (9) has an axial length (L₂₄) which is slightly greater than the axial distance (a₂₂) of the intermediate sealing element (21) from the sealing element (12) delimiting the calibration chamber (13) rearwardly.

4. Probe arrangement according to one of the preceding claims, **characterised in that** the calibration chamber (13) comprises ring channels (16, 19) which surround the calibration chamber (13) peripherally and serve as ports of the inflow and outflow opening (14, 15).

5. Probe arrangement according to claim 4, **characterised in that** the ring channel (19) associated to the outflow opening (15) is disposed in the probe holder (3).

6. Probe arrangement according to claim 4 or 5, **characterised in that** an axial ring gap (18) is provided downstream of the flushing openings (9) between probe holder (3) and measuring sensor (7) for the discharge of liquid towards the ring channel (19) of the outflow opening (15).

7. Probe arrangement according to claims 4 and 6, **characterised in that** a sealing shoulder (23) is disposed in the probe holder (3) between the flushing openings (9) and the ring channel (19), the sealing shoulder (23) cooperating with the intermediate sealing element (21) when in the calibration position.

8. Probe arrangement according to one of the preceding claims, **characterised in that** the inflow opening (14) is sealable against inflowing process fluid (4) by means of a non-return valve (25).

## Revendications

1. Dispositif à sonde destiné à mesurer des variables de processus, en particulier des grandeurs de mesure physico-chimiques, dans des fluides comportant
- un corps de sonde (1) pouvant être raccordé au récipient de processus,
- un support de sonde (3) axialement mobile dans un canal de guidage (2) du corps de sonde (1) entre une position de calibrage rentrée et une position de mesure sortie, lequel support comprend un cylindre protecteur (6) sur son extrémité avant (5) pouvant être immergée dans le fluide de processus (4),
- un capteur de mesure (7) maintenu dans le support de sonde (3), capteur dont la pointe de mesure (8) est disposée à l'intérieur d'une zone du cylindre protecteur (6) percée suivant une distance (a) de l'extrémité avant (5) pour former des ouvertures de rinçage (9),
- une chambre de calibrage (13) formée entre le support de sonde (3) et le canal de guidage (2),
- au moins respectivement une ouverture d'amenée et d'évacuation (14, 15) débouchant dans la chambre de calibrage (13) pour le liquide de calibrage et de rinçage, qui sont disposées avec un décalage axial (V) l'une par rapport à l'autre de telle sorte que les liquides traversant la chambre de calibrage (13) comprennent une direction de traversée (F) sensiblement axiale, orientée en s'éloignant du fluide de processus (4), et
- des éléments d'étanchéité (11, 12) délimitant la chambre de calibrage (13) de part et d'autre de l'ouverture d'amenée et d'évacuation (14, 15), disposés dans le corps de sonde (1), entre le support de sonde (3) et le canal de guidage (2),
**caractérisé en ce qu'**un élément d'étanchéité intermédiaire (21) destiné à étanchéifier la chambre de calibrage (13) en direction de l'ouverture d'évacuation (15) pendant que le support de sonde (3) avec le capteur de mesure (7) rentre et sort est disposé au voisinage de l'ouverture d'évacuation (15) entre celle-ci et l'ouverture d'amenée (14).

2. Dispositif à sonde selon la revendication 1, **caractérisé en ce que** l'élément d'étanchéité intermédiaire (21) comprend par rapport à l'élément d'étanchéité (12) délimitant la chambre de calibrage (13) à l'arrière à l'écart du fluide de processus (4) un écart axial (a₂₂) tel que lorsque le support de sonde (3) avec le capteur de mesure (7) rentre et sort dans une position intermédiaire, une liaison fluidique directe est établie entre le fluide de processus (4) et l'ouverture d'amenée (14).

3. Dispositif à sonde selon la revendication 2, **caractérisé en ce que** la tête (24) du cylindre protecteur (6) placée devant les ouvertures de rinçage (9) comprend une longueur axiale (L₂₄) qui est légèrement supérieure à l'écart axial (a₂₂) entre l'élément d'étanchéité intermédiaire (21) et l'élément d'étanchéité (12) délimitant la chambre de calibrage (13) à l'arrière.

4. Dispositif à sonde selon l'une quelconque des revendications précédentes, **caractérisé en ce que** la chambre de calibrage (13) comprend des canaux annulaires (16, 19) circulaires de manière périphérique comme embouchures de l'ouverture d'amenée et d'évacuation (14, 15).

5. Dispositif à sonde selon la revendication 4, **caractérisé en ce que** le canal annulaire (19) associé à l'ouverture d'évacuation (15) est placé dans le support de sonde (3).

6. Dispositif à sonde selon la revendication 4 ou 5, **caractérisé en ce qu'**un espace annulaire axial (18) destiné à évacuer le liquide en direction du canal annulaire (19) de l'ouverture d'évacuation (15) est prévu à la suite des ouvertures de rinçage (9) entre le support de sonde (3) et le capteur de mesure (7).

7. Dispositif à sonde selon les revendications 4 et 6, **caractérisé en ce qu'**un épaulement d'étanchéité (23) coopérant avec l'élément d'étanchéité intermédiaire (21) dans la position de calibrage est placé entre les ouvertures de rinçage (9) et le canal annulaire (19) dans le support de sonde (3).

8. Dispositif à sonde selon l'une quelconque des revendications précédentes, **caractérisé en ce que** l'ouverture d'amenée (14) peut être fermée par une soupape de retenue (25) par rapport à une pénétration du fluide de processus (4).
